# EUROPEAN PATENT APPLICATION

(11) **EP 3 059 684 A1**
(43) Date of publication of application: **24.08.2016**
(21) Application number: 13881086.6
(22) Date of filing: 21.11.2013
(51) Int. Cl.: G06F 17/30

(54) **WEBPAGE LAYOUT METHOD, DEVICE, COMPUTER STORAGE MEDIUM AND TERMINAL**

(30) Priority: 14.10.2013 CN 201310478495
(71) Applicant: ZTE Corporation, Shenzhen, Guangdong 518057 (CN)
(72) Inventor: LI, Junjiang, Shenzhen Guangdong 518057 (CN)
(74) Representative: Brevalex
(86) International application number: PCT/CN2013/087631
(87) International publication number: WO 2014/161320

(57) **Abstract**

The disclosure provides a webpage layout method and apparatus, a computer storage medium and a terminal. The webpage layout method includes steps as follows: it is determined whether a current webpage belongs to pre-counted webpages frequently accessed by a user, and a determining result is obtained; when the determining result is YES, a user preference value of each channel in the current webpage is counted, and the current webpage starts to be rendered; and during rendering the current webpage, if the user preference value of a detected channel is determined to be greater than a set basic preference value, all pieces of sub-link information in the channel are rendered; otherwise, if the user preference value of the detected channel is determined to be smaller than or equal to the basic preference value, all pieces of sub-link information in the channel are rendered in an additionally initiated thread.

## Description

### TECHNICAL FIELD

The disclosure relates to the field of communication, and in particular to a webpage layout method and apparatus, a computer storage medium and a terminal.

### BACKGROUND

With the continuous evolution of mobile internet, a user accesses the internet via a mobile phone client more frequently. However, the user most concerns a small part in a webpage after opening the webpage. Currently, the webpage presented in a mobile phone terminal is often very long. It is necessary to spend a lot of time dragging a scroll bar of a browser if the user expects to find contents of interest in the webpage, and the experience of the user is not high.

The webpage of the World Wide Web (WWW) is very long and wide, and after self-adapting to the screen or being transcoded via a website like Baidu, the webpage may become longer, thereby causing higher time consumption in dragging.

### SUMMARY

In order to solve the problems in the art, the embodiments of the disclosure provide a webpage layout method and apparatus, a computer storage medium and a terminal. The webpage layout is performed according to a user preference, thereby reducing the time for the layout and rendering of the webpages, and improving user experience.

In order to solve the above technical problems, an embodiment of the disclosure provides a webpage layout method, which may include:
it is determined whether a current webpage belongs to pre-counted webpages frequently accessed by a user, and a determining result is obtained;
when the determining result is YES, a user preference value of each channel in the current webpage is counted, and the current webpage starts to be rendered; and
during rendering the current webpage, if the user preference value of a detected channel is determined to be greater than a set basic preference value, all pieces of sub-link information in the channel are rendered; otherwise, if the user preference value of the detected channel is determined to be smaller than or equal to the basic preference value, all pieces of sub-link information in the channel are rendered in an additionally initiated thread.
Wherein, the pre-counted webpages frequently accessed by the user are counted as follows:
   an access number of each webpage is counted, and the webpages are ordered in a pre-set manner according to the access number; and
   webpages arranged in a pre-set range are selected as the webpages frequently accessed by the user according to an ordering result.

Wherein, the step that the user preference value of each channel in the current webpage is counted and the current webpage starts to be rendered when the determining result is YES may includes:
when the determining result is YES, it is detected whether a webpage editing mode is activated; and
when the webpage editing mode is detected to be activated, a user preference value of each channel in the current webpage are counted, and the current webpage starts to be rendered.

Wherein, the webpage layout method may further include:
the channel rendered in the additionally initiated thread is removed from a storage position in the current webpage.

Wherein, the user preference value of the channel may be an access number of all sub-links in the channel.

Wherein, the webpage layout method may further include that:
when the determining result is NO or when the webpage editing mode is detected to be deactivated or when the detected channel is empty, a layout the current webpage is performed, and the current webpage is activated.

In order to solve the technical problems, an embodiment of the disclosure also provides a webpage layout apparatus, which may include:
a determination module, configured to determine whether a current webpage belongs to pre-counted webpages frequently accessed by a user and obtain a determining result;
a counting module, configured to count a user preference value of each channel in the current webpage and start to render the current webpage when the determining result is YES; and
a rendering module, configured to, during rendering the current webpage, render all pieces of sub-link information in the channel if the user preference value of a detected channel is determined to be greater than a set basic preference value, and render all pieces of sub-link information in the channel in an additionally initiated thread if the user preference value of the detected channel is determined to be smaller than or equal to the basic preference value.

Wherein, the counting module may include:
a detection module, configured to detect whether a webpage editing mode is activated when the determining result is YES; and
a counting sub-module, configured to count the user preference value of each channel in the current webpage and start to render the current webpage when the webpage editing mode is detected to be activated.

Wherein, the webpage layout apparatus may further include:
a removal module, configured to remove the channel rendered in the additionally initiated thread in a storage position in the current webpage.

Wherein, the webpage layout apparatus may further include:
an opening module, configured to perform a layout and open the current webpage when the determining result is NO or when the webpage editing mode is detected to be deactivated or when the detected channel is empty.

In order to solve the technical problems, an embodiment of the disclosure also provides a computer storage medium. The computer storage medium includes a set of instructions. When the instructions are executed, at least one processor is triggered to execute the webpage layout method as described above.

In order to solve the technical problems, an embodiment of the disclosure also provides a terminal, which may include the webpage layout apparatus as described above.

The technical solutions of the embodiments of the disclosure have the beneficial effects as follows.

By means of the webpage layout method according to the embodiment of the disclosure, it is determined whether the current webpage belongs to the pre-counted webpages frequently accessed by the user; when the determining result is YES, a user preference value of each channel in the current webpage is counted, and the current webpage starts to be rendered; and when the webpage is rendered, if the user preference value of a detected channel is determined to be greater than the set basic preference value, all pieces of sub-link information in the channel are rendered; otherwise, a thread is additionally initiated to perform rendering. The layout of a part of the webpage is performed according to the user preference without the direct layout of the whole webpage, thereby reducing the time for the webpage layout and the rendering, and improving the user experience.

### BRIEF DESCRIPTION OF THE DRAWINGS

Fig. 1 is a flowchart of a webpage layout method according to an embodiment of the disclosure;
Fig. 2 is a flowchart of a webpage layout method according to a specific embodiment of the disclosure; and
Fig. 3 is a structural diagram of a webpage layout apparatus according to an embodiment of the disclosure.

### DETAILED DESCRIPTION

In order to perform the technical problems to be solved, technical solution and advantages of the disclosure more clear, which is described in detail below with reference to the accompanying drawings and the specific embodiments.

A webpage layout method according to an embodiment of the disclosure can perform a layout for webpages according to a user preference, thereby reducing the time for the layout and rendering of the webpages, and improving the user experience.

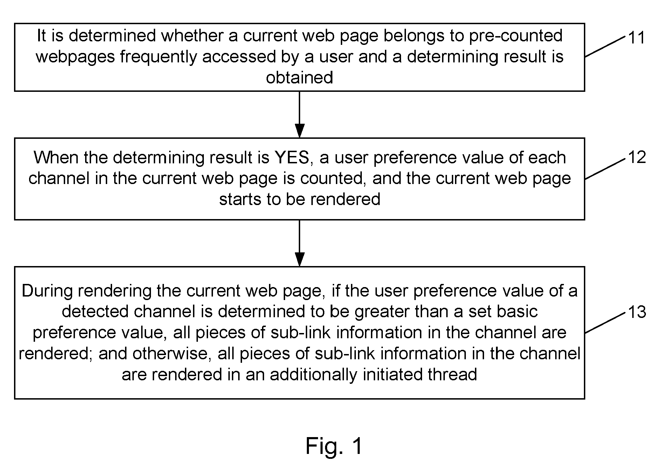

As shown in Fig. 1, a webpage layout method according to an embodiment of the disclosure includes the steps as follows:
Step 11: It is determined whether a current webpage belongs to pre-counted webpages frequently accessed by a user, and a determining result is obtained.
Step 12: When the determining result is YES, a user preference value of each channel in the current webpage is counted, and the current webpage starts to be rendered.
Step 13: When rendering the current webpage, if the user preference value of a detected channel is determined to be greater than a set basic preference value, all pieces of sub-link information in the channel are rendered; otherwise, all pieces of sub-link information in the channel are rendered in an additionally initiated thread.

By means of the webpage layout method according to the embodiment of the disclosure, it is firstly determined whether the current webpage belongs to the pre-counted webpages frequently accessed by the user; when the determining result is YES, a user preference value of each channel in the current webpage is counted, and the current webpage starts to be rendered; and when the webpage is rendered, if the user preference value of the detected channel is determined to be greater than the set basic preference value, all pieces of sub-link information in the channel are rendered; otherwise, a thread is additionally initiated to perform rendering. The layout of a part of the webpage is performed according to the user preference without the direct layout of the whole webpage, thereby reducing the time for the layout and rendering of the webpages, and improving the user experience.

In Step 11, the step that the webpages frequently accessed by the user are counted may include:
an access number of each webpage is counted, and the webpages are ordered in a pre-set manner according to the access number; and
webpages arranged in a pre-set range are selected as the webpages frequently accessed by the user according to an ordering result.

At this time, according to the embodiment of the disclosure, the layout of the webpages can be selectively performed according to the user preference, webpages rarely accessed by the user are not further analysed, and therefore the webpage layout can be performed more reasonably.

According to a specific embodiment, after the access number of each webpage included in a system is counted, the webpages are ordered from high to low according to the access number, and webpages of which the access numbers are in the top 100 are selected as the webpages frequently accessed by the user. The reasonability of the webpage layout is increased, and the user experience is improved.

Step 12 may include:
Step 121: when the determining result is YES, it is detected whether a webpage editing mode is activated; and
Step 122: when the webpage editing mode is detected to be activated, the user preference value of each channel in the current webpage is counted, and the current webpage starts to be rendered.

At this time, the user can choose whether to perform a layout for the webpages in accordance with the method according to the embodiment of the disclosure based on the activation or deactivation of the webpage editing mode, thereby increasing the practicality and the intelligence.

Preferably, in order to perform a more reasonable distribution of the channels in the current webpage, the webpage layout method according to the embodiment of the disclosure may further include that:
Step 14: the channel rendered in the additionally initiated thread is removed from a storage position in the current webpage.

At this time, the channels stored in the current webpage can be arranged more reasonably, so that the user can view the channels more conveniently, and the user experience is improved.

By means of the webpage layout method according to the embodiment of the disclosure, a complete Document Object Model (DOM) structure of a webpage could be kept, such that the user can check the complete webpage, and repeated downloading of data is avoided. If the user expects to check a channel of which a user preference value is lower than a basic preference value, all sub-links in a channel in a navigation bar of the webpage can be displayed by clicking this channel due to the fact that the channel of which the user preference value is lower than the basic preference value has been rendered in an additionally started thread in a process of rendering the whole webpage.

In Step 12, the user preference value of the channel is the access number of all the sub-links in the channel.

Preferably, the user preference value of the channel can be counted according to an established mapping table between the current webpage and the channels in the current webpage.

Specifically, a coordinate value in a webpage area where a sub-link of a certain channel in the current webpage is located can be obtained firstly, then the coordinate value is mapped to a corresponding partition div in a DOM, channel information corresponding to a current div (i.e. the sub-link of the channel) is found by traversing, a mapping relationship is established between a channel name and the DOM of the current webpage, the mapping table between the current webpage and the channels in the current webpage is established according to the mapping relationship, each access to the sub-link in the certain channel accessed by the user adds 1 to the channel of the mapping table, and a value displayed on the channel of the mapping table is the user preference value of the channel at this time.

Preferably, the webpage layout method according to the embodiment of the disclosure may further include that:
Step 15: when the determining result is NO or when the webpage editing mode is detected to be deactivated or when the detected channel is empty, a layout of the current webpage is performed, and the current webpage is activated.

Specifically, when the determining result is NO, it is shown that the current webpage does not belong to the webpages frequently accessed by the user, a layout is performed directly according to original states of the webpages and the current webpage is activated without further analysis; when the webpage editing mode is detected to be deactivated, it is shown that the user does not expect to perform analysis and layout of the webpages in accordance with the method according to the embodiment of the disclosure, a layout is performed directly according to the original states of the webpages and the webpage is activated; and when the detected channel is empty, it is shown that all the channels in the current webpage have been completely analysed and rendered, a layout is performed directly according to current states of the webpages and the current webpage is activated.

The specific embodiment of the disclosure is illustrated below.

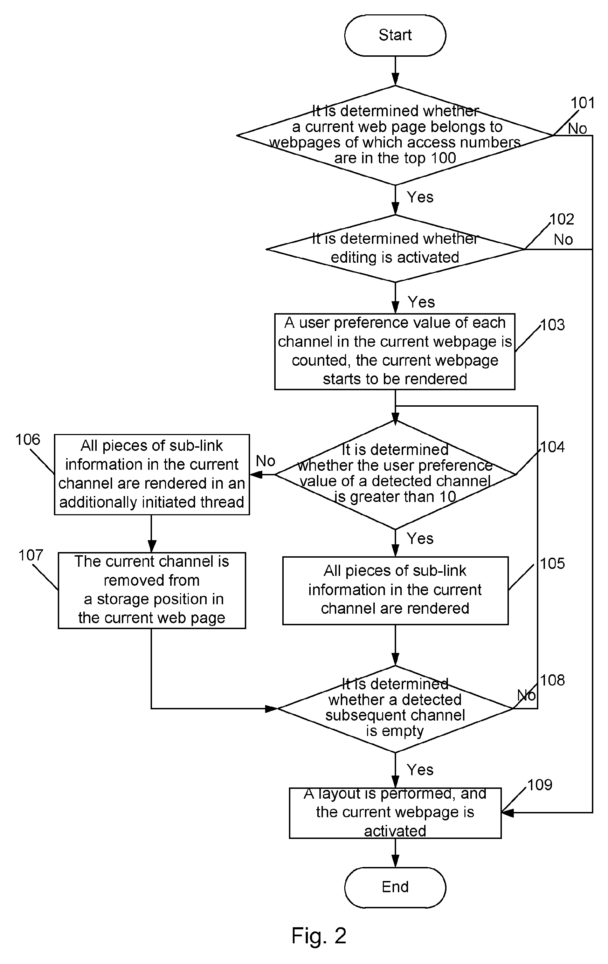

As shown in Fig. 2, it is assumed that pre-counted webpages frequently accessed by a user are webpages of which access numbers are in the top 100, and a set basic preference value is 10.

Step 101: It is determined whether a current webpage belongs to the webpages of which the access numbers are in the top 100, if so, Step 102 is executed, and otherwise, Step 109 is executed.

Step 102: It is detected whether a webpage editing mode is activated, if so, Step 103 is executed, and otherwise, Step 109 is executed.

Step 103: A user preference value of each channel in the current webpage is counted, the current webpage starts to be rendered, and Step 104 is executed.

Step 104: It is determined whether the user preference value of a detected channel is greater than 10, if so, Step 105 is executed, and otherwise, Step 106 is executed.

Step 105: All pieces of sub-link information in the current channel are rendered, and Step 108 is executed.

Step 106: All pieces of sub-link information in the current channel are rendered in an additionally initiated thread, and Step 107 is executed.

Step 107: The current channel is removed from a storage position in the current webpage, and Step 108 is executed.

Step 108: It is determined whether a detected subsequent channel is empty, if so, Step 109 is executed, and otherwise, Step 104 is re-executed.

Step 109: A layout of the current webpage is performed, and the current webpage is activated.

By means of the webpage layout method according to the embodiment of the disclosure, a layout can be performed for the webpages according to the user preference, thereby reducing the time for the layout and rendering of the webpages, and improving the user experience.

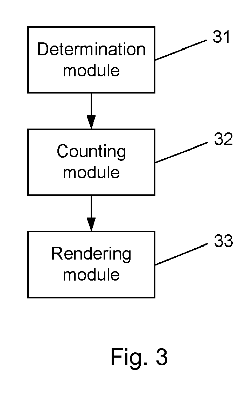

As shown in Fig. 3, an embodiment of the disclosure also provides a webpage layout apparatus, which includes:
a determination module 31, configured to determine whether a current webpage belongs to pre-counted webpages frequently accessed by a user and obtain a determining result;
a counting module 32, configured to count a user preference value of each channel in the current webpage and start to render the current webpage when the determining result is YES; and
a rendering module 33, configured to, when the current webpage is rendered, render, if the user preference value of a detected channel is determined to be greater than a set basic preference value, all pieces of sub-link information in the channel, and render, if the user preference value of the detected channel is determined to be smaller than or equal to the basic preference value, all pieces of sub-link information in the channel in an additionally initiated thread.

By means of the webpage layout apparatus according to the embodiment of the disclosure, a layout can be performed for the webpages according to the user preference, thereby reducing the time for the layout and the rendering of the webpages, and improving the user experience.

Wherein, when the webpages frequently accessed by the user are counted, an access number of each webpage can be counted, the webpages are ordered in a pre-set manner according to the access number, and webpages arranged in a pre-set range are selected as the webpages frequently accessed by the user according to the ordering of the webpages.

At this time, the layout of the webpages can be selectively performed according to the user preference, webpages rarely accessed by the user are not further analysed, and therefore the webpage layout can be performed more reasonably.

Wherein, the counting module 32 may include:
a detection module, configured to detect whether a webpage editing mode is activated when the determining result is YES; and
a counting sub-module, configured to count the user preference values of all channels in the current webpage and start to render the current webpage when the webpage editing mode is detected to be activated.

At this time, the user can choose whether to perform a layout for the webpages in accordance with the method according to the embodiment of the disclosure based on the activation or deactivation of the webpage editing mode, thereby increasing the practicality and the intelligence.

Wherein, the webpage layout apparatus according to the embodiment of the disclosure may further include:
a removal module, configured to remove the channel rendered in the additionally initiated thread in a storage position in the current webpage.

At this time, the channels in the current webpage can be arranged more reasonably, so that the user can view the channels more conveniently, and the user experience is improved.

Specifically, the user preference value of the channel is a counting number of all sub-links in the channel.

Wherein, the webpage layout apparatus according to the embodiment of the disclosure may further include:
an opening module, configured to perform a layout and open the current webpage when the determining result is NO or when the webpage editing mode is detected to be deactivated or when the detected channel is empty.

In practical application, the determination module, the counting module, the rendering module, the removal module and the opening module can be all implemented by a Central Processing Unit (CPU), a Digital Signal Processor (DSP) or a Field-Programmable Gate Array (FPGA) in the webpage layout apparatus.

The webpage layout apparatus according to the embodiment of the disclosure is an apparatus corresponding to the webpage layout method. All implementation modes in the method are applicable to the embodiment of the apparatus, and can achieve the effects that: a layout can be performed for the webpages according to the user preference, thereby reducing the time for the layout and the rendering of the webpages, and improving the user experience.

An embodiment of the disclosure also provides a computer storage medium. The computer storage medium includes a set of instructions. When the instructions are executed, at least one processor is triggered to execute the webpage layout method in the embodiment. The computer storage medium includes: various media capable of storing program codes such as a USB disk, a mobile hard disk, a Read-Only Memory (ROM), a disk or an optical disc.

Due to the fact that the webpage layout apparatus according to the embodiment of the disclosure is applied to a terminal, an embodiment of the disclosure also provides a terminal, which includes: the webpage layout apparatus according to the embodiment as described above. The implementation examples of the webpage layout apparatus are all applicable to the embodiment of the terminal, and can achieve the same technical effect.

The above is only preferred implementation modes of the disclosure. It should be pointed out that those skilled in the art can also perform some improvements and modifications without departing from the principle of the disclosure. These improvements and modifications should fall within the protection scope of the disclosure.

## Claims

1. A webpage layout method, comprising:
determining whether a current webpage belongs to pre-counted webpages frequently accessed by a user, and obtaining a determining result;
when the determining result is YES, counting a user preference value of each channel in the current webpage, and starting to render the current webpage; and
during rendering the current webpage, when the user preference value of a detected channel is determined to be greater than a set basic preference value, rendering all pieces of sub-link information in the channel; otherwise, when the user preference value of the detected channel is determined to be smaller than or equal to the basic preference value, rendering all pieces of sub-link information in the channel in an additionally initiated thread.

2. The method according to claim 1, wherein the pre-counted webpages frequently accessed by the user are counted by:
counting an access number of each webpage, and ordering the webpages in a pre-set manner according to the access number; and
selecting, according to an ordering result, webpages arranged in a pre-set range as the webpages frequently accessed by the user.

3. The method according to claim 1, wherein counting the user preference value of each channel in the current webpage and starting to render the current webpage when the determining result is YES comprises:
when the determining result is YES, detecting whether a webpage editing mode is activated; and
when the webpage editing mode is detected to be activated, counting a user preference value of each channel in the current webpage, and starting to render the current webpage.

4. The method according to claim 1, further comprising:
removing the channel rendered in the additionally initiated thread from a storage position in the current webpage.

5. The method according to claim 1, wherein the user preference value of the channel is an access number of all sub-links in the channel.

6. The method according to claim 2, further comprising:
when the determining result is NO or when the webpage editing mode is detected to be deactivated or when the detected channel is empty, making a layout, and opening the current webpage.

7. A webpage layout apparatus, comprising:
a determination module, configured to determine whether a current webpage belongs to pre-counted webpages frequently accessed by a user and obtain a determining result;
a counting module, configured to count a user preference value of each channel in the current webpage and start to render the current webpage when the determining result is YES; and
a rendering module, configured to, during rendering the current webpage, render all pieces of sub-link information in the channel when the user preference value of a detected channel is determined to be greater than a set basic preference value, and render all pieces of sub-link information in the channel in an additionally initiated thread when the user preference value of the detected channel is determined to be smaller than or equal to the basic preference value.

8. The apparatus according to claim 7, wherein the counting module comprises:
a detection module, configured to detect whether a webpage editing mode is activated when the determining result is YES; and
a counting sub-module, configured to count the user preference value of each channel in the current webpage and start to render the current webpage when the webpage editing mode is detected to be activated.

9. The apparatus according to claim 7, further comprising:
a removal module, configured to remove the channel rendered in the additionally initiated thread from a storage position in the current webpage.

10. The apparatus according to claim 8, further comprising:
an opening module, configured to perform a layout and open the current webpage when the determining result is NO or when the webpage editing mode is detected to be deactivated or when the detected channel is empty.

11. A computer storage medium, comprising a set of instructions, when the instructions are executed, at least one processor being triggered to execute a webpage layout method according to any one of claims 1 to 6.

12. A terminal, comprising a webpage layout apparatus according to any one of claims 7 to 10.
